# EUROPEAN PATENT APPLICATION

(11) **EP 3 293 686 A1**
(43) Date of publication of application: **14.03.2018**
(21) Application number: 16187599.2
(22) Date of filing: 07.09.2016
(51) Int. Cl.: G06Q 20/32, G06Q 20/36

(54) **METHOD AND SYSTEM FOR ALLOWING OFFLINE PEER-2-PEER TRANSACTIONS USING EXCHANGEABLE PROVISIONED TOKENS**

(71) Applicant: MASTERCARD INTERNATIONAL, INC., Purchase, NY 10577-2509 (US)
(72) Inventor: DUNNE, Mark Thomas, Dublin, Dublin 8 (IE)
(74) Representative: FRKelly

(57) **Abstract**

Provided are a computer-implemented method and system for performing an offline peer-to-peer (P2P) based transaction between a payer device and payee device, comprising establishing communication between the payer device and payee device via a short-range wireless communication protocol; sending transaction information data regarding a transaction from the payee device to the payer device; allowing a user to select a provisioned token on the payer device; generating a payee token for the value of the transaction using the provisioned token and the transaction information data; sending the payee token from the payer device to the payee device; and settling the transaction the next time either one of the payee device or payer device connects to a secure network.

## Description

### Field of the Invention

The present disclosure relates to a transaction method and system. More particularly, the present disclosure relates to a method and system for allowing offline token-based peer-to-peer (P2P) transactions between mobile devices.

### Background of the Disclosure

Typically consumers use cash, debit cards or credit cards when making purchases or conducting transactions in real or virtual retail outlets. Credit or debit cards are ubiquitous nowadays, and for years such cards have included a magnetic stripe on which the relevant account number is stored. Traditionally, to consummate a purchase transaction with such a card, the card is swiped through a magnetic stripe reader that is part of a point of sale (POS) terminal. The account number is read by the reader from the magnetic stripe. The account number is then used to route a transaction authorisation request that is initiated by the POS terminal. Card-based transactions are typically performed across multiple channels of commerce. For example, card-based transactions may be performed in person at a retail outlet, via a computer connected to the Internet, via a mobile device such as a smartphone and/or via a call centre.

Electronic commerce, such as online shopping, has been increasingly common since the beginning of the Internet. Online shopping websites generally provide a user interface for customers to select items or services for purchase. After the customer has selected items for purchase, the customer typically can choose from multiple payment/credit options to purchase the products. Two conventional payment/credit options supported by online merchants include using a financial account, for example, a credit card or current account, and using a third party payment service provider. The customer typically enters details of their credit or debit card in the user interface when purchasing items.

Lately, there has been growing interest in electronic or "cash-less" retail payment systems which do not rely on traditional credit or debit cards. Such systems can expedite payment. Electronic commerce transactions can be effected by using a digital wallet, which refers to an electronic device that allows an individual to make electronic purchases. This can include purchasing items on-line with a computer or using a mobile device to purchase something at a store. Increasingly, digital wallets are being made not just for basic financial transactions but also to authenticate the holder's credentials. For example, a digital wallet can be used to verify the age of the purchaser.

The ability to make payments using mobile devices provides a further advantage in that the consumer does not have to carry physical funding instruments, such as credit cards, cash, and debit cards. Conventional systems for making electronic retail payments include "contactless" credit and debit card systems, which are proprietary systems developed by banks and/or credit card companies that use electronically-equipped cards or other electronic devices capable of transmitting and receiving radio frequency (RF) signals. Such system provides cardholders with a more user-friendly means of completing a credit/debit transaction by bringing a contactless-enabled payment card or other payment device, such as a key fob, proximal to a point-of-sale terminal reader, rather than swiping or inserting a card.

In a typical transaction using a credit or debit card, a cardholder wishing to complete a transaction (or make a payment) provides a card number together with other card details (such as a card expiry date, card code verification (CCV) number etc.) to a merchant at a point of sale (POS). The merchant transmits the card number and the details to an 'acquirer', i.e. a financial institution that facilitates and processes card payments made to the merchant. The acquirer then transmits an authorization request via a payment card network to an issuer or provider of the card used to make the payment.

The issuer processes the received request and determines whether or not the request is allowable. If the issuer determines that the payment request is allowable, an authorization response is transmitted via the payment card network to the acquirer and transfer of the payment amount to the merchant's account is initiated.

Responsive to receiving the authorization response from the issuer, the acquirer communicates the authorization response to the merchant. In this manner, a card number may be used to effect a card payment to a merchant.

There are multiple different types of payment cards available on the market, and multiple ways to fund and effect the payment for goods. In some cases, a payment card may serve a specific purpose. For example, a payment card may be configured to enable a customer to make payments and/or withdraw cash in one or more foreign currencies. Additionally or alternatively, a payment card may be a virtual credit card enabling a user to purchase items without exposing the user to the possibilities of credit card fraud. For example, the number of payments and/or the amount for which payments can be made using a virtual credit card may be limited.

Mobile wallet applications on a mobile device allow the user to select one of a plurality of stored cards in order to make a payment, as many consumers use more than one card in a given day. However, with mobile devices acting as payment devices, selecting a particular card often involves unlocking the phone, launching the mobile wallet application, selecting the card and then tapping the phone. This is a lengthy process that can prolong the purchasing transaction. When faced with a lengthy multi-step process of selecting a card on their mobile device or simply pulling the desired card out of their physical wallet, the consumer may prefer to reach for their actual physical wallet and card.

Payment cards can facilitate the performing of transactions electronically. The customer may use a payment card in conjunction with a merchant's device (e.g. an electronic point of sale) to perform a transaction with the merchant. For example, the customer may wish to purchase goods or services from the merchant, and so the customer may use the payment card to transfer funds or payment into the merchant's account in exchange for receiving the goods or services from the merchant.

The problem being addressed by this disclosure is a user's inability to make secure payment card transactions with entities when they are in an offline state.

### Summary of the Invention

The present disclosure provides a computer-implemented method as detailed in claim 1. Also provided are a terminal according to claim 10, a computer-implemented method according to claim 11, a terminal according to claim 13, a device according to claim 14, and a system in accordance with claim 15. Certain exemplary, advantageous features are provided in dependent claims.

The present disclosure allows a user to securely create provisioned tokens using a previously provisioned payment card. Each token may have a specific monetary value, for example $1 or €1. The provisioned tokens may then be stored in a user's in-app virtual wallet and may be locked to the user's mobile device. The customer may then be free to trade these tokens, much like they would use currency in the form of coins, with other users or machines, e.g., slot machines, regardless of their mobile device being connected to a network. The user's mobile device may be fitted with a Near Field Communication (NFC) interface to enable the device to electronically communicate with a merchant device to exchange the tokens. Once either payer or payee party connects to a secure network, the transaction may be settled. Records of token trades may be kept and transmitted once either payer or payee party connects to the secure network.

### Brief Description of the Drawings

Figure 1 is a flow diagram illustrating a method for an offline peer-to-peer (P2P) based transaction involving a payer device and a payee device, according to an embodiment of the present disclosure;
Figure 2 is a flow diagram illustrating the provisioning of a token according to an embodiment of the present disclosure;
Figure 3 is a screenshot illustrating how a token is provisioned by a user or payer on a payer device, according to an embodiment of the present disclosure;
Figure 4 is a screenshot illustrating a bill of sale being created on a merchant or payee device, according to an embodiment of the present disclosure;
Figures 5a to 5c are screenshots illustrating a bill of sale being received and selecting a token to use at the payer device, according to an embodiment of the present disclosure;
Figure 6 is a screenshot of a purchase receipt with an attached payee token on the payer device, according to an embodiment of the present disclosure;
Figure 7 is a screenshot showing a sales receipt with an attached payee token on the payee device, according to an embodiment of the present disclosure;
Figure 8 is a flow diagram of a settlement process according to an embodiment of the present disclosure; and
Figure 9 is a block diagram illustrating a configuration of a mobile device including various hardware and software components that function to perform the methods according to embodiments of the present disclosure.

### Detailed Description

The present disclosure provides a computer-implemented method and system for token-based transactions using a payment card such as a credit or debit card. The computer-implemented method may be embodied as part of an application or 'app' on a user device such as mobile device. The user device may be a customer or payer device for making a payment. The user device may alternatively be a merchant or payee device. It will be understood that payments may be made from the payer device to the payee device using tokens, as described below. In a situation where both the payer device and payee device are mobile devices such as smart phones, peer-to-peer (P2P) transactions can be conducted between users that have the app installed and provisioned on their mobile device but either one or both parties are offline.

A computer-implemented method and system for an offline peer-to-peer (P2P) token based transaction using a payee device and a payer device are provided, the payee device and the payer device being configured to communicate with each other. The method and system may be primarily aimed at users of mobile devices such as smartphones. For example, the computer-implemented method may be embodied as part of an application or 'app' on the mobile device. The app may be manually activated by the user, or automatically activated on receipt of a bill of sale as will be described later. Such users may be purchasers or merchants, or more generically, payers and payees. An app installed on the payer or payee device may be regarded as a customer app or merchant app, respectively.

Accordingly, the present disclosure provides a computer-implemented method for performing an offline peer-to-peer (P2P) based transaction, the method being performed by a payer device and comprising operating a processor associated with the payer device to: establish communication with a payee device via a short-range wireless communication protocol; receive transaction information data from a payee device regarding a transaction; allow a user to select a provisioned token on the payer device; generate a payee token for the value of the transaction using the provisioned token and data retrieved from the transaction information data; send the payee token from the payer device to the payee device; and settle the transaction when the payer device connects to a secure network.

Also provided is a computer-implemented method for performing an offline peer-to-peer (P2P) based transaction, the method being performed by a payee device and comprising operating a processor associated with the payer device to: establish communication with a payer device via a short-range wireless communication protocol; send transaction information data regarding a transaction to a payer device; receive a payee token from the payer device corresponding to the value of the transaction, the payee token generated using a provisioned token on the payer device and data retrieved from the transaction information data; and settle the transaction when the payee device connects to a secure network.

Further provided is a computer-implemented system for performing an offline peer-to-peer (P2P) based transaction, the system comprising a payee device and a payer device configured to communicate with each other via a short-range wireless communication protocol, wherein: the payer device is configured to: provide a provisioned token for selection; receive transaction information data from the payee device regarding a transaction; generate a payee token for the value of the transaction using the provisioned token and data retrieved from the transaction information data; and send the payee token from the payer device to the payee device; and the payee device is configured to: send the transaction information data to the payer device; receive the payee token from the payer device; and wherein the transaction is settled the next time either one of the payee device or payer device connects to a secure network.

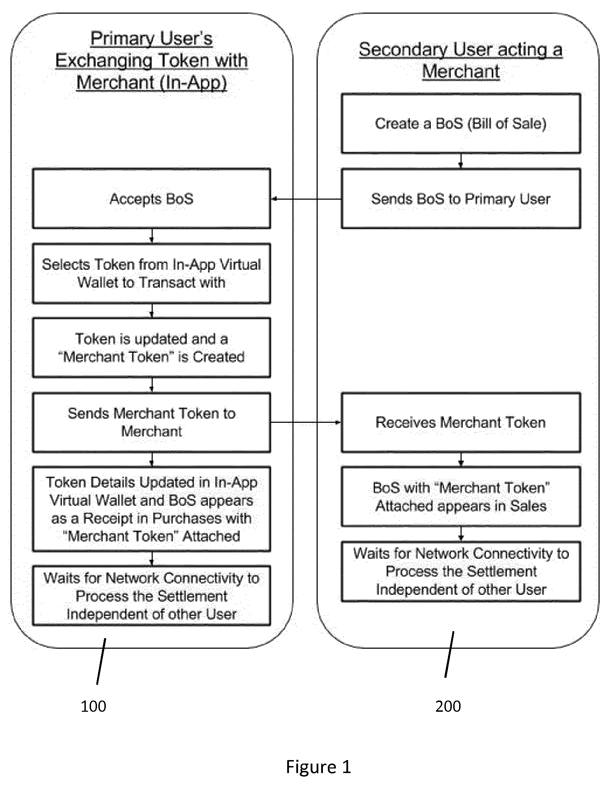

Figure 1 is a flow diagram illustrating a method for an offline peer-to-peer (P2P) based transaction involving a payer device 100 and a payee device 200, according to an embodiment of the present disclosure. Referring to Figure 1, the computer-implemented method may be embodied as part of an application or 'app' running on the payer device 100. The payer device 100 and the payee device 200 may be configured to communicate with each other using a short-range wireless communication protocol, such as via a QR code scan or using a Near Field Communication (NFC) interface.

The computer-implemented method according to the present disclosure allows a user to create provisioned tokens securely from their already provisioned payment card. The payment card may be associated with a credit card account, a debit card account, a checking account, a savings account, or a loyalty rewards account. A token may be a data packet (i.e. portion of data) which corresponds to a monetary value. The token may include a reference or identifier of the payment account and thereby correspond with the payment account. In an embodiment, the token may not include any details of the account, for example, an account number, an account holder's details (e.g. name or address), the amount of funds in the account. Each token may have a specific monetary value, e.g., $1 or €1. During the creation of the tokens the user may select the number of tokens they wish to provision. The monetary value for each of the tokens may be subtracted from the user's available credit on their linked provisioned payment card at the point of issuing. All the tokens with their monetary value may be held in a settlement account. Once the tokens are provisioned they may be stored in a virtual wallet on the payer device 100. The tokens may be locked to both user and payer device 100 using key data. This means that stolen tokens cannot be used by another user on another device or another user on the same device, etc. Biometrics may be used to process transactions on tokens adding additional layers of security. When a user has provisioned tokens in their virtual in-app wallet they are free to trade them with other users or machines, i.e., slot machines. A record may be stored locally on the user device in terms of a receipt for each transacted token with all the relevant key data. For example, the key data may comprise at least one of a device identifier and a user identifier, i.e., an identifier of the party who received the token. As transactions can happen when a user is offline, when the user reconnects to a network any stored data in terms of transacted tokens may be uploaded. For example, a reference of the current user holding the token may be updated in the database. Information regarding all previous owners of a specific token may also be stored. A token remains in circulation until the current possessor wishes to redeem the token, in which case the monetary value held in the settlement account for the token being redeemed may be added as credit to the balance of the provisioned payment card of the redeeming user. Referring to Figure 1, when the payer device 100 connects to a secure network, the transaction may be settled independently of the network connection status of the payee device 200. Similarly, when the payee device 200 connects to a secure network, the transaction may be settled independent of the network connection status of the payer device 100.

The computer-implemented method of the present disclosure enables the capture of small transactions that would otherwise be carried out with coin. A user may block provision larger sums of tokens they may need for smaller individual transactions, akin to withdrawing money from an ATM. Data may also be gathered in relation to each of these smaller transactions.

The method facilitates P2P in-app transactions between users that have the required app installed and provisioned on their smart device but either one or both parties are offline. A prerequisite to processing a P2P in-app payment through the use of provisioned tokens is that the user who wishes to make a payment to another user has a provisioned token stored in their in-app virtual wallet.

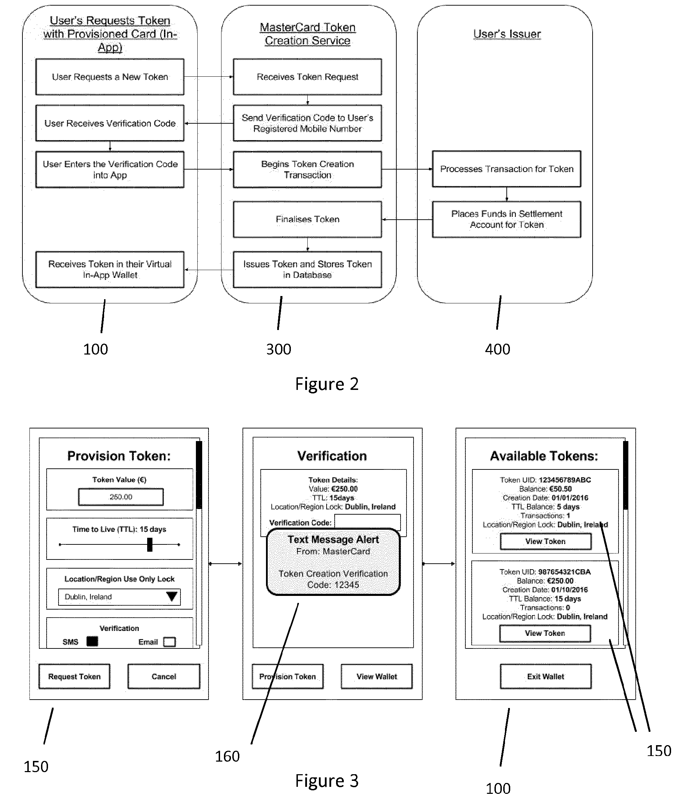

Figure 2 is a flow diagram illustrating how a token is provisioned according to an embodiment of the present disclosure. The provisioning of tokens requires secure network access. During the provisioning process the monetary value of the token set by the user may be subtracted from the user's available credit on their provisioned payment card. This subtracted credit may then be held in a settlement account until the token is either deleted or a settlement occurs, in each case the credit is passed onto the correct party. The provisioning of tokens may comprise generating key data matching key data on the provisioned payment card. The generated key data may comprise at least one of a payer device identifier and a payer identifier. That is, the provisioned tokens may be locked to the payer device using key data such as the device identifier and user identifier. The key data may be configured to match the key data that is linked to their already provisioned payment card in order for the token to be provisioned. Also, tokens may only be accepted as payment if the token is sent from a device with the same device identifier to which it is provisioned.

Referring to Figure 2, the provisioning of tokens involves a payer device 100, a token generator 300, and a payer issuer 400. It will be understood that the payer device 100 may be a device associated with the customer or purchaser. The payer issuer 400 may be an issuer, such as a bank, of a payment card of the user acting as the payer. Firstly, a request for a new token may be sent from the payer device 100 to the token generator 300. The token generator 300 may receive the token request and send a verification code to the payer device 100. The user may receive the verification code at the payer device 100 and enter the verification code into an app on the payer device 100. Entry of the verification code may trigger the token creation process at the token generator 300. The payer issuer 400 may process a transaction for the creation of a token. Funds corresponding to a value of the token may be placed in a settlement account. The token may be then finalised and issued, and the token stored in the token generator database. The token may be received at the payer device 100 and stored in a digital wallet on the payer device 100. For example, the digital wallet may be a virtual in-app wallet on the payer device 100.

Figure 3 is a screenshot illustrating how a token 150 is provisioned by a user or payer, according to an embodiment of the present disclosure. Referring to Figure 3, a time to live (TTL) setting may be associated with a token, e.g., 15 days. A maximum number of transactions allowed for a provisioned token may be set. A location/region in which the provisioned tokens can only be used may also be set. Such settings may be determined by the user at the point of creation. In the case of the TTL setting reaching its expiration, the user may be reminded that they have a token that needs to be deleted from the in-app virtual wallet. Referring to Figure 3, when tokens are provisioned, a message 160 such as a SMS alert or email may be sent to the user. Referring to Figure 3, available tokens 150 may be displayed for view on a user interface of the user or payer device 100. The provisioned tokens may be stored in a virtual wallet on the payer device 100.

When the user deletes the token, all settlements due on the token may occur if they have not done so already. This measure ensures that payments to other users occur before the owner of a token can delete the token. The settlement of an offline P2P (peer-to-peer) in-app based payment with provisioned tokens may be initiated when either party to the payment reconnects to a network.

With reference to Figure 1, the flow of an offline peer-to-peer (P2P) payment method with provisioned tokens according to an embodiment of the present disclosure may be as follows.

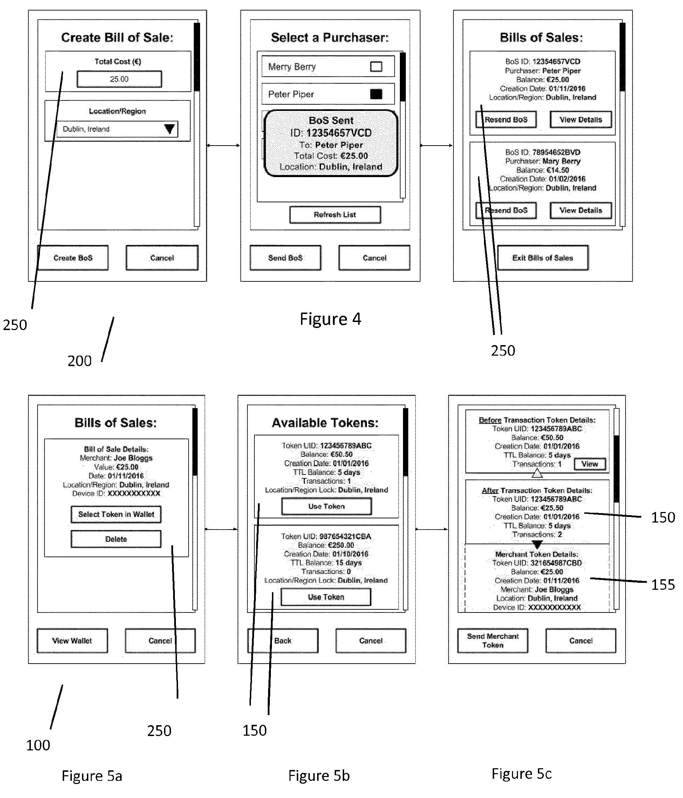

At the point of sale a user acting as a merchant or payee creates transaction information data on their device. The transaction information data may comprise data regarding a transfer of ownership of goods, services or items from one party to another. For example, the transaction information data may comprise a bill of sale. The transaction information data may comprise data about the good/services for sale, an amount, one or more identifiers comprising an identifier of the payee device, and additional data. Figure 4 is a screenshot illustrating a bill of sale 250 being created on a merchant or payee device 200, according to an embodiment of the present disclosure. The merchant device may be otherwise known as the payee device, that is, a device associated with a user who may be providing goods or services for sale. The bill of sale 250 may comprise, in addition to information about the good/services for sale, key data associated at least with the payee device 200. For example, the key data may comprise a payee device ID. The bill of sale may be delivered to a user acting as a customer or payer via a short-range wireless communication protocol, e.g., as a QR code scan or a NFC tap between their smart devices. In this manner, all the required data for the sale may be transferred from the merchant to the customer. That is, the bill of sale may be delivered from the payee device 200 to the payer device 100. Figures 5a to 5c are screenshots illustrating a bill of sale 250 being received at the payer device 100, according to an embodiment of the present disclosure.

Referring to Figure 5a, the customer confirms the bill of sale details through the app on the payer device 100 and selects a provisioned token 150 from their in-app virtual wallet to process the P2P in-app payment with, as shown in Figure 5b. The selected provisioned token 150 may be then restructured as follows. Referring to Figure 5c, a payee token 155 for the value of the sale is generated and locked to the payee device 200 using the data retrieved with the bill of sale 250 such as the payee device ID. This means only the device with the same device identifier that is contained in the payee token 155, as well as the device linked to the provisioned payment card, can request settlement of the token's funds to the linked payment card.

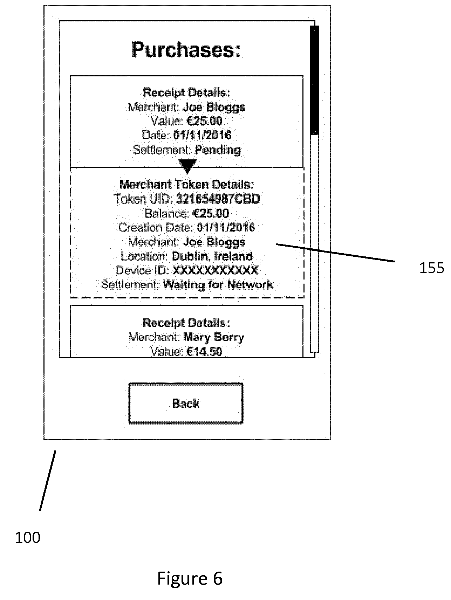

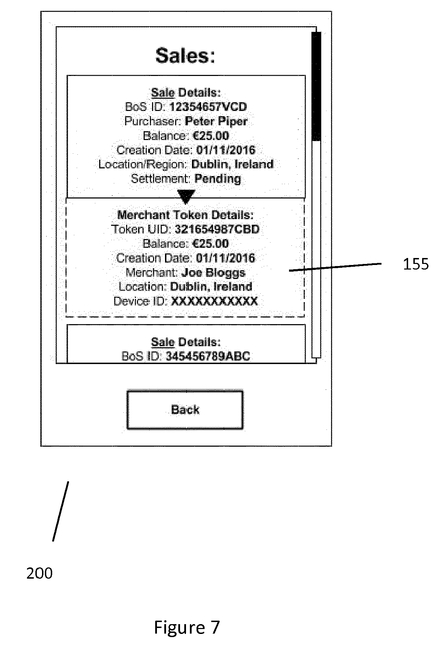

Referring to Figure 5c, the payer's provisioned token 150 may be adapted to reflect its new balance and is ready for future transactions to take place. A receipt for the sale may be stored within the payer device 100 and may be linked to the generated payee token 155 which is also stored on the payer device 100. The receipt and the payee token 155 may be stored in the payment app on the payer device 100. Figure 6 is a screenshot of a purchase receipt with an attached payee token 155 on the payer device 100, according to an embodiment of the present disclosure. Figure 7 is a screenshot showing a sales receipt with an attached payee token 155 on the payee device 200, according to an embodiment of the present disclosure.

The payee token 155 may be then transmitted from the payer device 100 to the payee device 200, e.g., as a QR code scan or using the NFC protocol. The transaction may be settled the next time either one of the payer device 100 or the payee device 200 connect to a secure network. Referring to Figure 1, when the payer device 100 connects to a secure network, the transaction may be settled independent of the network connection status of the payee device 200. Similarly, when the payee device 200 connects to a secure network, the transaction may be settled independent of the network connection status of the payer device 100.

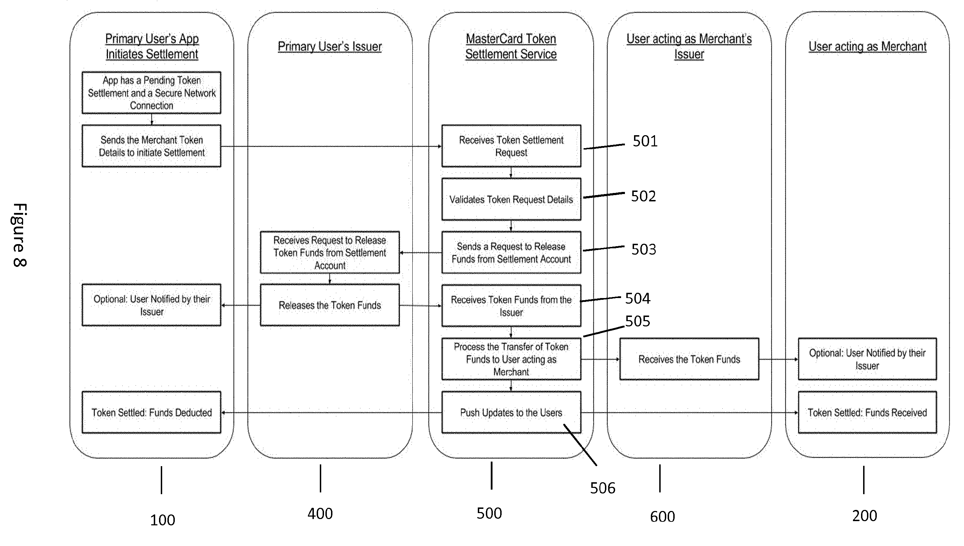

Figure 8 is a flow diagram of a settlement process according to an embodiment of the present disclosure. Referring to Figure 8, the payer may have a pending token settlement and a secure network connection at the payer device 100. Communication may be established between the payer device 100 and the payee device 200. The communication may be established via the short-range wireless communication protocol. A token settlement request may be sent to a token settlement service provider 500 in step 501. The token settlement service provider 500 may be a networked computing device configured for processing settlement transactions. The token settlement service provider 500 comprises a processor configured for processing settlement transactions as described herein. The payee token details may be validated at the token settlement service provider 500 in step 502. A request may be sent to a payer issuer 400 to release funds from a settlement account in step 503. The payer issuer 400 then releases funds and the token settlement service provider 500 receives the funds from the payer issuer 400 in step 504. The funds may be then transferred by the token settlement service provider 500 to a payee issuer 600 in step 505. The payee issuer 600 may be an issuer, such as a bank, of a payment card of the user acting as the merchant or payee. The payer may be notified of the transfer at the payer device 100. The payee may be notified of the transfer at the payee device 200. The payee device 200 then receives the funds. At least one of the users, i.e. the payer and the payee may be notified of the settlement transaction at the payer device 100 and/or the payee device 200 in step 506.

The payer device 100 preferably transmits the token to the payee device 200 only in response to an input received from a user of the payer device 100. Also, the payee device 200 preferably receives the token from the payer device 100 only in response to an input received at the payee device 200 from a user of the payee device 200. In other words, user input is required in order to conduct the payment transaction. Accordingly, the payee device 200 and/or the payer device 100 may comprise an input means, such as a keypad or a touch screen. In use, a user of the payee device 200 and/or the payer device 100 may control its respective input means to provide an input to the respective device.

The merchant or payee device 200 may comprise a physical terminal such as a slot machine. For example, the payee device 200 may comprise one or more of: a portable computing device (e.g. a laptop computer, a smartphone, a tablet computer etc.); a desktop computer; a Point of Sale (POS) or merchant terminal, for example located a terminal located at a physical point of sale such as a shop or restaurant. Alternatively, the payee device 200 may be a terminal associated with a virtual Point Of Sale, e.g. a POS at which online purchases or payments may be made. The payee device 200 may be a device such as a portable telephone or computer (e.g. a 'smartphone' or tablet computer).

When a secure connection is established, the payer device 100, the payee device 200, the token generator 300, the payer issuer 400, the token settlement service provider 500 and the payee issuer 600 may communicate with each other over a secure network using any suitable means, for example but not limited to a wireless or cellular network. A short range communication may be established between the payer device and payee device via Bluetooth™; Near-Field Communication (NFC); Infra-Red (IR) Communication; or Magnetic Induction.

The network may comprise any network across which communications can be transmitted and received. For example, the network may comprise a wired or wireless network. The network may, for example, comprise one or more of: the Internet; a local area network; a mobile or cellular network; a mobile data network or any other suitable type of network.

The payment app on the payer device 100 may be configured to receive information about goods/services to be transacted. The payment app on the payer device 100 may be automatically launched when transaction information data such as a bill of sale is received from the payee device 200. Selecting the item may then display to the user on the payer device 100 information or additional information about the item. For example, a previous content screen may be replaced by a screen with a description of the item to be purchased, and the amount involved. This information page, in another embodiment, may be a pop up or overlay of the content screen, which allows the user to remain on a main content page.

A digital wallet provided on the payer device 100 may be configured to store provisioned tokens. The digital wallet may be configured to be associated with the payment app on the payer device 100. The digital wallet enables storage of one or more tokens that can be used for offline purchases. The digital wallet also enables storage of one or more records. Each record may include or be associated with a financial account, such as a credit card account, a debit card account, a checking account, a savings account, a loyalty rewards account, or other type of account that can be used to make a purchase. The digital wallet can store, for each record, information associated with the financial account for that record. For example, the user may save a record for each of their bank accounts in the digital wallet. This payment information can include a financial account identifier, for example, account number, card number, an expiration date of one or more financial cards associated with the financial account, and a billing address for the account. The payment information may also include information associated with the user, such as name, contact information, for example, residential address, phone number, e-mail address, demographic information, or any other suitable information associated with the user. The payment information also may include shipping information, such as one or more shipping addresses, preferred shipping provider(s), and preferred shipping method(s), for example, ground, air, expedited, signature confirmation, or other shipping method. The payment information for each record may be maintained by the digital wallet and stored in a data storage unit such as a memory on the payer device 100.

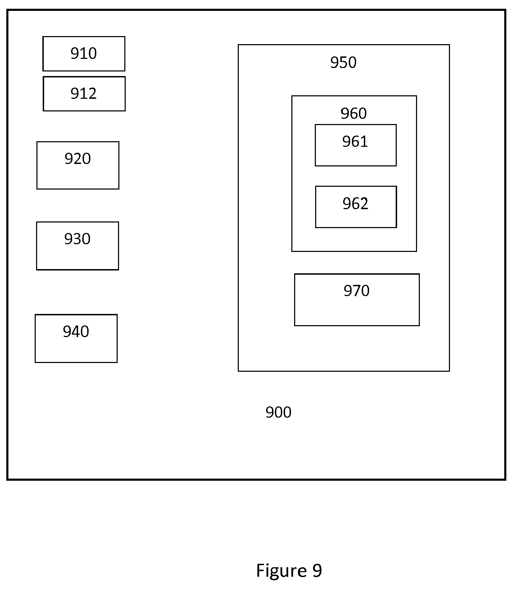

Figure 9 is a block diagram illustrating a configuration of a mobile device 900 according to an embodiment of the present disclosure. The mobile device 900 includes various hardware and software components that function to perform the methods according to the present disclosure. The mobile device 900 may be a payer device or payee device as described above. Referring to Figure 9, the mobile device 900 comprises a user interface 910, a processor 920 in communication with a memory 950, and a communication interface 930. The processor 920 functions to execute software instructions that can be loaded and stored in the memory 950. The processor 920 may include a number of processors, a multi-processor core, or some other type of processor, depending on the particular implementation. The memory 950 may be accessible by the processor 920, thereby enabling the processor 920 to receive and execute instructions stored on the memory 950. The memory 950 may be, for example, a random access memory (RAM) or any other suitable volatile or non-volatile computer readable storage medium. In addition, the memory 950 may be fixed or removable and may contain one or more components or devices such as a hard drive, a flash memory, a rewritable optical disk, a rewritable magnetic tape, or some combination of the above.

One or more software modules 960 may be encoded in the memory 950. The software modules 960 may comprise one or more software programs or applications having computer program code or a set of instructions configured to be executed by the processor 920. Such computer program code or instructions for carrying out operations for aspects of the systems and methods disclosed herein may be written in any combination of one or more programming languages.

The software modules 960 may include a payment app 961 and/or a merchant app 962 configured to be executed by the processor 920. During execution of the software modules 960, the processor 920 configures the mobile device 900 to perform various operations relating to the facilitating and processing of transactions according to embodiments of the present disclosure, as has been described above.

Other information and/or data relevant to the operation of the present systems and methods, such as a database 970, may also be stored on the memory 950. The database 970 may contain and/or maintain various data items and elements that are utilized throughout the various operations of the payment system described above. The information stored in the database 970 may include but is not limited to, credit card details and billing information unique to the consumer and/or payment method, personal information for each consumer, banking information and a history of transactions by the consumer. One or more digital wallets may be stored in the database 970. It should be noted that although the database 970 is depicted as being configured locally to the mobile device 900, in certain implementations the database 970 and/or various other data elements stored therein may be located remotely. Such elements may be located on a remote device or server - not shown, and connected to the mobile device 900 through a network in a manner known to those skilled in the art, in order to be loaded into a processor and executed.

Further, the program code of the software modules 960 and one or more computer readable storage devices (such as the memory 950) form a computer program product that may be manufactured and/or distributed in accordance with the present disclosure, as is known to those of skill in the art.

The communication interface 940 is also operatively connected to the processor 920 and may be any interface that enables communication between the mobile device 100 and external devices, machines and/or elements including a token generator and payer/payee issuer as described above. The communication interface 940 is configured for transmitting and/or receiving data. For example, the communication interface 940 may include but is not limited to a Bluetooth, or cellular transceiver, a satellite communication transmitter/receiver, an optical port and/or any other such, interfaces for wirelessly connecting the mobile device 900 to the other devices.

The user interface 910 is also operatively connected to the processor 920. The user interface may comprise one or more input device(s) such as switch(es), button(s), key(s), and a touchscreen.

The user interface 910 functions to allow the entry of certain information about the user and preferred options as discussed above, and to allow selection of provisioned tokens. The user interface 910 functions to facilitate the capture of commands from the user such as an on-off commands or settings related to operation of the payment system.

A display 912 may also be operatively connected to the processor 920. The display 912 may include a screen or any other such presentation device that enables the user to view various options, parameters, and results. The display 912 may be a digital display such as an LED display. The user interface 910 and the display 912 may be integrated into a touch screen display.

The operation of the mobile device 900 and the various elements and components described above will be understood by those skilled in the art with reference to the method and system for performing offline peer-to-peer (P2P) based transactions according to the present disclosure.

The present disclosure provides a method and system for allowing offline P2P transactions using exchangeable provisioned tokens. A user can securely store provisioned tokens in a virtual wallet which are locked to the user's mobile device. The user may then be free to trade these tokens, much like they would use currency in the form of coins, with other users or machines, for purchasing good or services, regardless of their mobile device being connected to a network. The user's mobile device may be configured to establish a short-range communication with a merchant device to perform the token transaction. Once either payer or payee party connects to a secure network, the transaction may be settled. Records of token trades may be kept and transmitted once either payer or payee party connects to the secure network.

A payee token for the value of the transaction can be generated based on a provisioned token on the user's mobile device. The payee token is generated using transaction information data generated at the payee device. By locking the provisioned token to the payer device from which the payee token is generated, only the device with the same device identifier that is contained in the payee token, as well as the device linked to the provisioned payment card, can request settlement of the token's funds to the linked payment card.

The present disclosure is not limited to the embodiment(s) described herein but can be amended or modified without departing from the scope of the present disclosure. Additionally, it will be appreciated that in embodiments of the present disclosure some of the above-described steps may be omitted and/or performed in an order other than that described.

## Claims

1. A computer-implemented method for performing an offline peer-to-peer (P2P) based transaction, the method being performed by a payer device and comprising operating a processor associated with the payer device to:
establish communication with a payee device via a short-range wireless communication protocol;
receive transaction information data from a payee device regarding a transaction;
allow a user to select a provisioned token on the payer device;
generate a payee token for the value of the transaction using the provisioned token and the transaction information data;
send the payee token from the payer device to the payee device; and
settle the transaction when the payer device connects to a secure network.

2. The method of claim 1, comprising provisioning tokens on the payer device via secure network access with a token generator and an issuer of a provisioned payment card of the payer.

3. The method of claim 2, wherein the payment card is associated with a credit card account, a debit card account, a checking account, a savings account, or a loyalty rewards account.

4. The method of claim 2 or 3, wherein the provisioning of tokens comprises subtracting a monetary value of a token set by a user from the payer's available credit on the provisioned payment card of the payer.

5. The method of claim 4, wherein the subtracted credit is held in a settlement account until the token is either deleted or a settlement occurs.

6. The method of any of claims 2 to 5, wherein the provisioning of tokens comprises generating key data matching key data on the provisioned payment card, wherein the generated key data comprises at least one of a payer device identifier and a payer identifier.

7. The method of any preceding claim, comprising assigning user-defined characteristics to provisioned tokens, optionally comprising at least one of:
associating a time to live (TTL) setting with a provisioned token, and
allowing a maximum number of transactions for a provisioned token.

8. The method of any preceding claim, wherein the payee token is generated using data retrieved from the transaction information data, the transaction information data comprising at least a payee device identifier.

9. The method of any preceding claim, wherein the settling of the transaction comprises authorising the payment service provider to credit an account associated with the merchant with the purchase amount.

10. A terminal for generating tokens, the terminal comprising a processor configured to perform the method according to any of claims 1 to 9.

11. A computer-implemented method for performing an offline peer-to-peer (P2P) based transaction, the method being performed by a payee device and comprising operating a processor associated with the payee device to:
establish communication with a payer device via a short-range wireless communication protocol;
send transaction information data regarding a transaction to a payer device;
receive a payee token from the payer device corresponding to the value of the transaction, the payee token generated using a provisioned token on the payer device and the transaction information data; and
settle the transaction when the payee device connects to a secure network.

12. The method of claim 11, wherein the payee token is only accepted as payment if the payee token is sent from a device with the same device identifier to which it is provisioned.

13. A terminal for receiving tokens, the terminal comprising a processor configured to perform the method according to claim 11 or 12.

14. A networked computing device for settling a peer-to-peer (P2P) based transaction, the device comprising a processor configured to:
receive a token settlement request from a payer device;
validate the token settlement request;
send a request to a payer issuer to release funds from a settlement account;
receive funds from the payer issuer;
process the transfer of token funds to a payee issuer; and
notify at least one of the payer device and the payee device of the settlement transaction.

15. A computer-implemented system for performing an offline peer-to-peer (P2P) based transaction, the system comprising a payee device and a payer device configured to communicate with each other via a short-range wireless communication protocol, wherein:
the payer device is configured to:
provide a provisioned token for selection;
receive transaction information data from the payee device regarding a transaction; generate a payee token for the value of the transaction using the provisioned token and the transaction information data; and
send the payee token from the payer device to the payee device; and
the payee device is configured to:
send the transaction information data to the payer device;
receive the payee token from the payer device; and
wherein the transaction is settled the next time either one of the payee device or payer device connects to a secure network.
